Europäisches Patentamt

European Patent Office

Office européen des brevets

(19)

(11) Veröffentlichungsnummer: **0 116 357**

**B1**

(12) # EUROPÄISCHE PATENTSCHRIFT

(45) Veröffentlichungstag der Patentschrift:
18.05.88

(51) Int. Cl.⁴: **B 29 C 39/10**, B 68 G 5/02

(21) Anmeldenummer: **84101157.0**

(22) Anmeldetag: **04.02.84**

(54) **Verfahren und Vorrichtung zur Herstellung von Schaumstoffpolstern mit einem Klettband.**

(30) Priorität: **08.02.83  DE 3304111**

(43) Veröffentlichungstag der Anmeldung:
**22.08.84 Patentblatt 84/34**

(45) Bekanntmachung des Hinweises auf die Patenterteilung:
**18.05.88 Patentblatt 88/20**

(84) Benannte Vertragsstaaten:
**AT BE CH FR GB IT LI LU NL SE**

(56) Entgegenhaltungen:
**FR-A-2 287 332**
**FR-A-2 405 123**
**FR-A-2 412 736**
**FR-A-2 423 666**
**FR-A-2 463 870**
**FR-A-2 466 330**

(73) Patentinhaber: **Vauth & Sohn KG, Hembser Strasse 1, D-3492 Brakel 4 (DE)**

(72) Erfinder: **Albers, Friedhelm, Gehrdener Weg 2, D-3492 Brakel- Schmechten (DE)**
Erfinder: **Vauth, Hermann, Hembser Strasse 1, D-3492 Brakel 4 (DE)**

(74) Vertreter: **Hanewinkel, Lorenz, Dipl.- Phys., Patentanwalt Ferrariweg 17a, D-4790 Paderborn (DE)**

LIBER, STOCKHOLM 1988

## Beschreibung

Die Erfindung betrifft ein Verfahren und eine Vorrichtung zum Herstellen von Schaumstoffpolstern, insbesondere aus Polyurethanschaum, mit mindestens einem Klettband, das aus einem Haken- oder Filzbereich besteht.

Es ist aus FR-A1-2 466 330 ein Verfahren bekannt, bei dem ein Klettband mit einem doppelseitigem Klebeband an einer Formwand während des Schäumens des Polsters gehaltert wird, wodurch jedoch ein Eindringen des Schaumstoffes, inbes. bei kräftigem Hakenband, in den Hakenbereich nicht zu vermeiden ist, und wobei die zum Schaumstoff gerichtete Seite des Bandes mit einem besonderen Haftfilm versehen ist, der jedoch ein Eindringen des Schaumstoffes in das Gewebe des Bandes und damit eine innige Verbindung mit demselben verhindert.

Es ist weiterhin bekannt, an Schaumstoffpolstern Klettbänder durch Kleben zu befestigen, oder Klettbänder auf eine Stoffumhüllung aufzunähen, und diese mit Schaumstoff auszuschäumen. Die geklebten Klettbänder lösen sich mit zunehmenden Alter der Polster durch Verhärtung oder chemische Veränderung des Klebstoffes, insbesondere bei hohe Scherbeanspruchung beim Öffnen der Klettverschlüsse, z. B. beim Abziehen der durch Klettband befestigten Bezüge oder beim Abnehmen der mit Klettband am Gestell befestigten Polster. Das Aufkleben der Klettbänder stellt einen von Hand auszuführenden Arbeitsgang dar.

Das Befestigen der Klettbänder durch Aufnähen auf eine Stoffhülle stellt einen erheblichen Arbeitsaufwand dar, und die Stoffhülle ist relativ kostenaufwendig. Außerdem wird durch die Stoffhülle das Gewicht der Polster erhöht, was insbesondere bei Flugzeugpolstern ein erheblicher Nachteil ist.

Es ist aus der DE-OS-2 223 356 bekannt, einen Polyurethankern mit teilweise einer Polyurethanhaut und teilweise mit einem textilen Polsterstoff zu versehen. Hierbei ist ein Auswechseln und getrenntes Reinigen des Polsterstoffes nicht möglich. Der Polsterstoff ist für Flüssigkeit undurchlässig gemacht, so daß nur eine geringe Bindung zum Polyurethankern vorhanden ist.

Weiterhin ist aus DE-OS-2 017 442 bekannt, eine Zierleiste in ein Teil aus Integralschaum einzuschäumen, deren Kontaktseite mit einer Textilschicht beschichtet ist und deren Kanten vom Integralschaum überlappt werden. Da die Zierleiste massiv ist, tritt der Schaum nicht in diese ein, und es besteht somit keine innige unmittelbare Verbindung. Die Problematik, die bei dem Einschäumen von Klettbändern auftritt, daß zwar eine innige Bindung des Gewebes mit dem Schaum erfolgen muß, andererseits aber das Haken- oder Filzgewebe nicht von diesem durchdrungen werden darf, ist hierbei nicht gelöst.

Es ist Aufgabe der Erfindung, ein Verfahren zu offenbaren, das eine sehr feste und keiner Alterung unterworfene Verbindung zwischen dem Schaumstoff und dem Klettband liefert, wobei zwar eine innige Bindung des Gewebes mit dem Schaum erfolgte, andererseits aber das Haken- oder Filzgewebe nicht von diesem durchdrungen wird und wobei keine Gewichtserhöhung des Polsters entsteht und welches mit geringem Zeitaufwand und ohne zusätzlichen oder mit relativ geringem Materialaufwand durchgeführt werden kann.

Die Lösung der Aufgabe besteht darin, daß das Klettband an einer Formwand einer Form zum Schäumen des Polsters mit einem weiteren Halteklettband, vorzugsweise einem Hakenband, oder durch Vakuum oder durch Klebstoff oder Klebeband oder in einer Passungsnut im Haken- bzw. Filzbereich lösbar gehaltert wird und der Haken- bzw. Filzbereich randseitig gegen Eindringen von Schäummaterial abgedichtet wird und das Klettband in einem solchen Abstand zur Formwand gehalten wird, daß der Schaumstoff beim Schäumen dieses seitlich umschließt.

Vorteilhafte Ausgestaltungen des Verfahrens und der Vorrichtung zur Durchführung des Verfahrens sowie der danach hergestellten Polster sind in den Unteransprüchen angegeben.

Das Umschließen der Webkante durch den Schaumstoff hat den besonderen Vorteil, daß beim Trennen der Klettverschlüsse keine Scherkräfte, sondern Zugkräfte auf die Verbindungszone ausgeübt werden, wodurch ein Ausreißen praktisch unmöglich ist, da die Zugfestigkeit wesentlich höher als die Scherfestigkeit ist.

Insbesondere bei Flugzeugpolstern gibt es Ausführungen, auf denen vorder- und rückenseitig bzw. oben- und untenseitig Klettbänder angebracht sind. Dadurch ergeben sich beim Aufschäumen des Schaumstoffes unterschiedliche Verhältnisse für die einzelnen Klettverbindungen, da das Schäummaterial beim Einfüllen auf die untere Formwand sehr dünnflüssig ist und es sich beim Aufschäumen insbesondere an der Oberfläche verfestigt und es somit mit wesentlich zäherer Konsistenz die oben in die Form eingelagerten Klettbänder umschließt.

Dementsprechend sind Vorrichtungen zur Durchführung des Verfahrens unterschiedlicher Ausgestaltung, die abhängig von dem Einzelfall einzeln oder in Kombination eingesetzt werden können, in den Beispielen dargestellt.

Diese Ausführungen betreffen einerseits die verschiedenen Dichtmittel, die das Eindringen des Schäummaterials in den Haken- oder Filzbereich verhindern, und andererseits das Halten des Klettbandes in der richtigen Lage sowie das intensive Durchsetzen des Klettbandgewebes mit dem Schaumstoff zur Herstellung einer guten Verbindung.

Das Dichtproblem ist insbesondere schwierig, wenn Hakenbänder auf den Polstern anzubringen sind, da die Haken relativ weit stehen und ein Eindringen flüssigen Schäummaterials leichter möglich ist. Die Anbringung der Hakenbänder am Schaumstoff ist aber zweckmäßig, da sich an dem Bezug die Filzbänder leichter annähen lassen, diese wegen ihres geringen Gewichts geringere Waschkosten verursachen und beim Waschen widerstandsfähiger sind.

In Fällen, in denen nur geringe Kräfte beim Trennen auftreten, z. B. bei schmalen Klettbändern oder solchen mit niedrigem Filz, genügt es in bestimmten Lagen in der Form, das Band lediglich in eine Passungsnut einzusetzen, die es hält und seitlich abdichtet.

Eine weitere Möglichkeit zur lösbaren Halterung besteht darin, das Band durch Klebetupfen zu haltern und abzudichten, insbesondere wenn die Halterung durch die Passung nicht voll ausreichend ist. In vorteilhafter Weise wird dazu ein Kleber verwendet, der beim Einbringen in die Form elastisch ist und durch das Heizen während des Schäumvorganges versprödet und dadurch beim Ausformen leicht lösbar ist und aus dek Filz- oder Hakenbereich leicht herausfällt oder ausgebürstet werden kann.

Klettbänder ohne Webkante werden zur besseren Verbindung mit dem Schaumstoff vorteilhaft mit einem grobporigen oder mit austretenden Schlingen versehenen Rücken hergestellt. Alternativ können die Klettbänder auch in Automaten auf ein grobporiges Trägerband aufgenäht werden.

In den Figuren 1 bis 11 sind Polster und Formen zu deren Herstellung unter Verwendung des Verfahrens dargestellt.

Fig. 1 zeigt ein Sitz- und Lehnpolster im senkrechten Schnitt;

Fig. 2 zeigt das Lehnpolster von vorn;

Fig. 3 zeigt eine Form zum Schäumen des Lennpolsters;

Fig. 4 zeigt einen Querschnitt durch eine Haltevorrichtung für Klettband im Ausschnitt aus der Form;

Fig. 4a zeigt einen vergrößerten Ausschnitt aus Fig. 4;

Fig. 5, 6 zeigen vergrößerte Ausschnitte Alternativen zu Fig. 4;

Fig. 7, 8 zeigen weitere Alternativen von Haltevorrichtungen für Klettband mit plastischer Dichtung;

Fig. 9, 10 zeigen Haltevorrichtungen mit Vakuum.

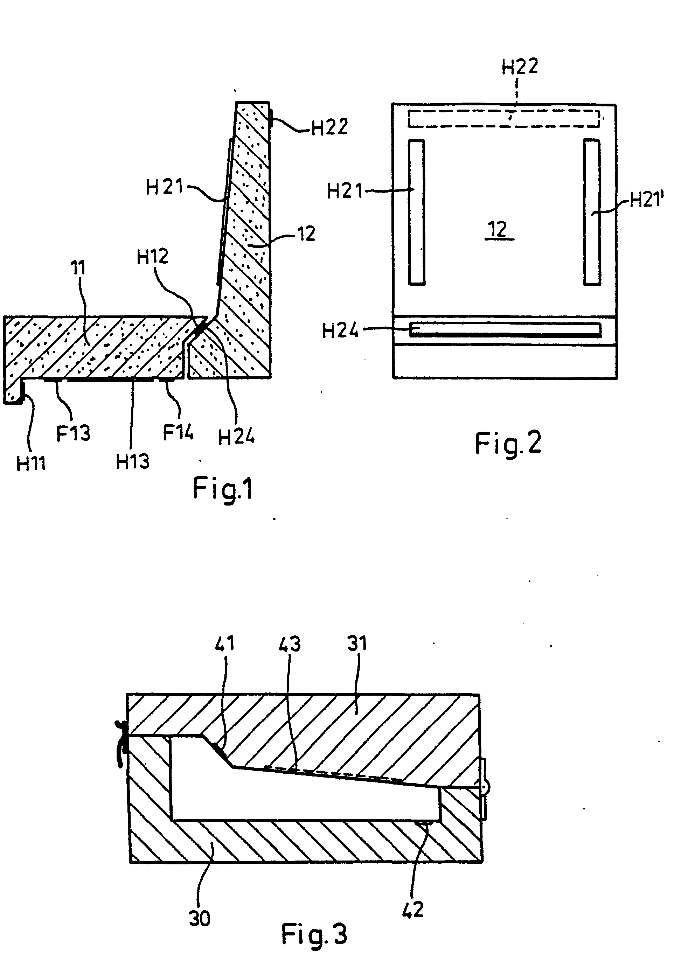

In Fig. 1 ist ein typisches Beispiel für die Schaumstoffpolster eines Flugzeugsitzes im senkrechten Schnitt dargestellt. Als Schaumstoff wird im allgemeinen offenporiger Polyurethanschaum verwendet. Die Sitz- un Lehnfläche 11, 12 wird mit Polsterstoff überzogen, der an der Unter- oder Rückseite mit Hakenbändern H11, H12, H13; H22, H24 befestigt wird. Weiterhin sind im Rückenbereich (Fig. 2) Hakenbänder H21, 21' angebracht, die ein besseres Anliegen des Polsterstoffes, insbesondere bei gewölbten Polstern, gewährleisten.

Auf der Unterseite des Sitzpolsters sind außerdem Filzbänder F13, F14 vorgesehen, durch die eine Verbindung zum Sitzgestellt das mit Hakenbändern ausgerüstet ist, hergestellt wird.

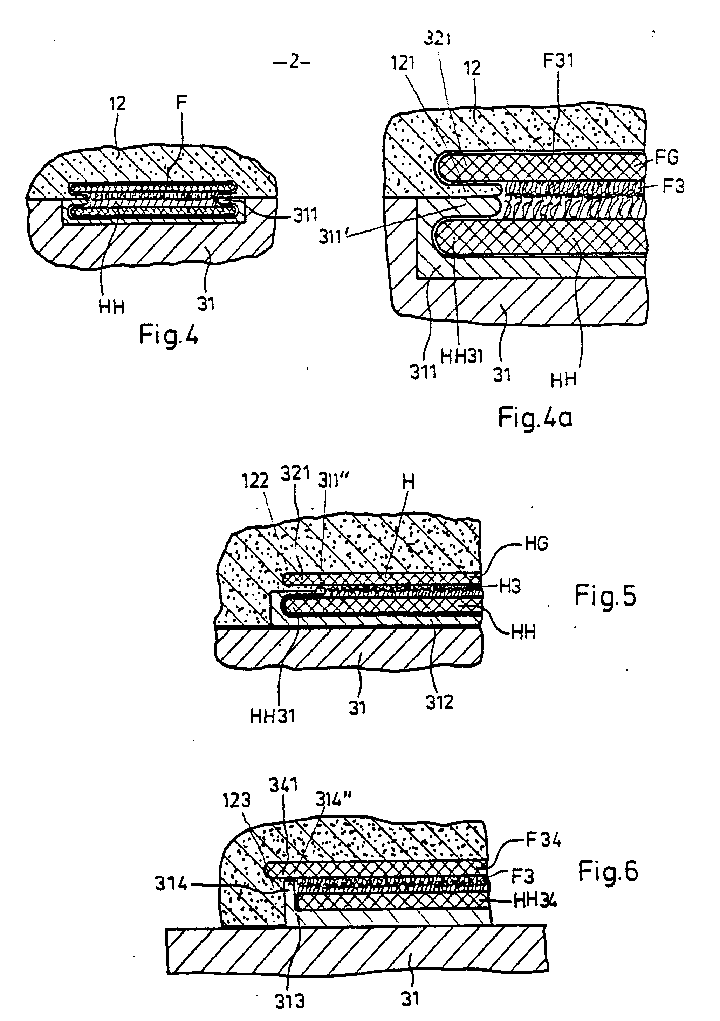

Fig. 3 zeigt eine Form zum Schäumen des Rückenpolsters im Schnitt, die aus einer unteren und oberen Formwand 30, 31 besteht, in denen Haltevorrichtungen 41, 42, 43 in verschiedenen Lagen angeordnet sind. Im Bodenbereich ist das frisch eingefüllte Schäummaterial sehr flüssig, weshalb die Haltevorrichtung 42 mit besonderen Dichtmitteln ausgestattet wird. Die Haltevorrichtung 41 hingegen erfordert nur eine Abdichtung gegen bereits zäh verfestigten Schaum. Eine solche sehr einfache Ausführung ist in Fig. 4 dargestellt, von der ein Detailausschnitt in Fig. 4a gezeigt ist.

In der Formwand 31 ist eine Schiene 311 eingesetzt, in der ein Halteklettband HH, vorzugsweise durch Kleben, befestigt ist, deren Webkantenbereich HH 31 durch einen U-förmigen Steg 311' der Schiene 311 umfaßt wird. Dieser Steg 311'entspricht in seiner Stärke etwa der Höhe der Haken des Halteklettbandes HH, wodurch ein. Abstand zu dem Webkantenbereich 321 eines Klettbandes F31, das in das Halteklettband HH eingeklettet wird, bestehen bleibt, der etwa der Höhe des Filzbereiches F3 entspricht. Der zähe Schaum 121 dringt beim Aufschäumen in diesen freien Bereich ein und umgibt somit das Klettbandgewebe FG und den Webkantenbereich 321 in Form einer Lippe. Da der Abstand relativ gering ist, und der Filzbereich FG verhältnismäßig dicht ist, dringt der Schaum in diesen nicht ein.

Nach dem Ausformen liegt die Filzoberfläche mit dem Schaumstoff etwa bündig. In Fig. 5 ist eine Ausführung der Haltevorrichtung gezeigt, mit der das Klettband H nach innen versetzt in dem Schaumstoff angebracht wird, wie dies z. B. im Rückenbereich zweckmäßig ist, damit keine störenden Erhebungen des Bezuges entstehen. Hierzu ist die Schiene 312 auf die Formwand 31 aufgesetzt.

Da als Klettband ein Hakenband H vorgesehen ist, dessen Hakenbereich H3 nicht so dicht wie der Filzbereich F3 eines Filzbandes F31 ist, ist der Steg 311' zum Abschluß mit einer Dichtkante 311'' versehen, die in inrer Höhe etwa der zusätzlichen Höhe des Hakenbereiches H3 entspricht und etwa die gleiche Breite wie Stärke besitzt. Der Schaumstoff 122 umfaßt somit den größten Teil des Webkantenbereiches 321 des Klettbandes H.

In Fig 6 ist eine andere Alternative der Haltevorrichtung dargestellt. Hierbei ist das Halteklettband HH34 ohne Webkantenbereich in einer U-Schiene 313 befestigt. Die Schenkel 314 der U-Schiene bilden die Dichtkante 314'' zum Webkantenbereich 313, des gehaltenen Klettbandes, da sie in ihrer Länge der Stärke des Halteklettbandes HH34 mit seinen Haken und dem gehaltenen Filzbereich F3 entsprechen und ihre Breite einen Bruchteil des Webkantenbereiches 341 abdecken.

Durch Absenken der U-Schiene in die Formwand kann die Lage des Klettbandes im Schaumstoff bestimmt werden. Statt in einer U-Schiene kann das Klettband auch direkt in der Formwand in einer eingearbeiteten Nut oder auf der Wand befestigt werden und eine Dichtkante durch Fräsen oder Aufsetzen angebracht werden. Die Verwendung einer U-Schiene bzw. der Schienen in den anderen Beispielen hat den Vorteil, daß diese leicht auswechselbar sind, wenn das Halteklettband ermüdet oder verstopft ist.

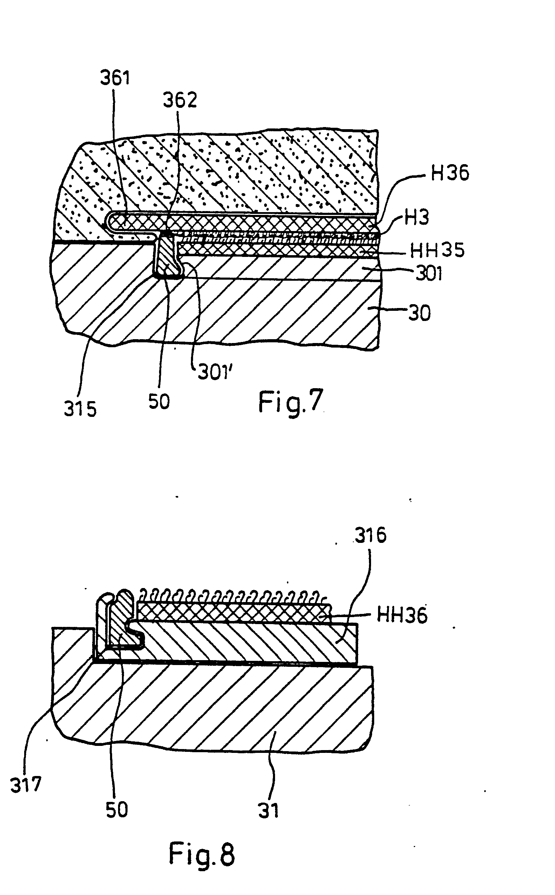

Eine in die Formwand 30 eingearbeitete Haltevorrichtung zeigt Fig. 7. Das Halteklettband HH35 ist auf die Formwand, etwas eingesenkt ohne Webkantenbereich, aufgeklebt. Entlang der Kante ist eine Nut 315 mit Hinterschneidung in die Formwand gefräst oder eine Platte 301, deren Kante 301' die Hinterschneidung bildet, ist unter dem Halteklettband HH35 in der Formwand eingelegt.

Die Dichtkante ist als Wulst 50 in die Nut eingelegt und überragt diese bis in den Filz- oder Hakenbereich H3 des eingelegten Klettbandes H36 entlang des Handbereiches 362. Der Wulst 50 ist vorzugsweise aus Borsiloxan hergestellt, da dieses Material sich einerseits in den Hakenbereich abdichtend eindrückt, andererseits sich leicht aus diesem unter Rückbildung einer glatten Oberfläche lösen läßt. Weiterhin hat dieses Material eine trennende Eigenschaft zum Polyurethanschaumstoff und läßt sich somit leicht entformen. Somit bildet eine Wulst aus Borsiloxan oder einem Material mit ähnlichen Eigenschaften eine so gute Dichtung, daß auch frisch eingefülltes Schäummittel abgedichtet wird.

In Fig. 8 ist eine entsprechende Anordnung in einer Schiene 316 dargestellt, an deren Schenkel entlang in einer Nut 317 der Wulst 50 eingesetzt ist. Diese Schiene kann für Wartungszwecke leicht ausgewechselt werden.

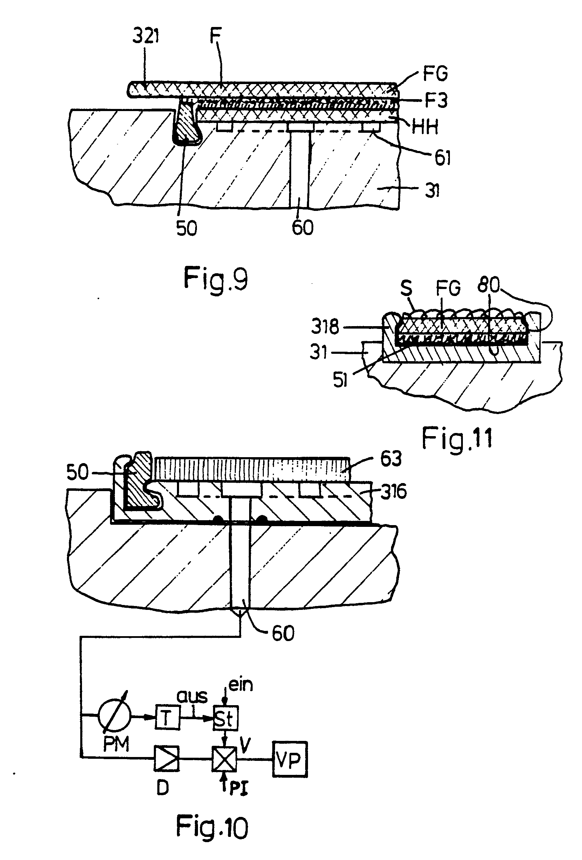

Eine weitere vorteilhafte Ausgestaltung der Haltevorrichtung ist in den Figuren 9 und 10 dargestellt.

Zusätzlich zur Anordnung nach Fig. 7 sind in Fig. 9 Bohrungen 60 und Nuten 61 in der Formwand gewebsseitig hinter dem Halteklettband HH angebracht, die mit einer Vakuumanlage verbunden sin. Das Vakuum dringt durch die Poren des Halteklettbandes und hält das aufgelegte Klettband F zusätzlich fest. Außerdem saugt es das flüssige oder zähe Schäummaterial in das Klettbandgewebe FG, wodurch eine innigere Verbindung entsteht.

In Fig. 10 ist eine Haltevorrichtung mit Vakuum dargestellt, die in ihrem Aufbau oder nach Fig. 8 ähnlich ist, bei der aber auf das Halteband völlig verzichtet ist und dieses durch eine luftdurchlässige Platte 63, z. B. einen Filz oder eine Lochplatte, ersetzt ist. Das Entformen ist nach Abschalten des Vakuums ohne Ausreißgefahr, die bei zu geringer Aushärtung beim Ablösen von einem Halteklettband gegeben ist.

Weiterhin ist in Fig. 10 schematisch die Vakuumanlage dargestellt, die das Vakuum zum Halten und Durchtränken liefert. Als Vakuumpumpe VP kann ein Turbinenlüfter dienen, der einige 100 Torr Unterdruck liefert. Das Vakuum wird über ein Ventil V gesteuert durch die Steuervorrichtung St der Bohrung 60 bzw. den Nuten 61 zugeführt. Um ein gutes Durchtränken des Gewebes zu gewährleisten, aber das Eindringen des Schäummaterials in den Filz- oder Hakenbereich zu verhindern, ist es zweckmäßig, das Vakuum noch während des Schäumvorganges abzuschalten. Hierzu ist ein voreinstellbares Zeitglied T vorgesehen, das entweder durch ein Startsignal mit Beginn des Schäumvorganges oder vorteilhaft mit einem Druckwächtersignal gestartet wird, und dessen Ausgangssignal über die Steuervorrichtung das Ventil auf den Innendruck PI der Form umschaltet.

Das Vakuum wird über eine Drossel D den Klettband zugeführt, das die durch die Poren tretende Luft an der Drossel D einen Druckabfall entstehen läßt. Sobald der Schaum das Gewebe abdichtet, tritt zwischen dem Klettband und der Drossel D ein Druckabfall auf, durch den der an diese Leitung angeschlossene Druckwächter PM bei geeigneter Einstellung eines Schwellwertes an das Zeitglied T signalisiert wird.

Um eine besonders innige Verbindung von Klettbandgewebe und Schaumstoff zu erreichen, wird zweckmäßig ein poröses Gewebe verwandt. Die Festigkeit wird durch den eingedrungenen Schaumstoff im fertigen Polster erreicht. Das Band selbst ist dadurch leichter und flexibler. Es ist auch möglich, nur den Webkantenbereich grobporig auszuführen. Dadurch wird eine innige Verbindung und eine Verteilung und Verminderung der Kantenkräfte, die zur Ablösung führen können, erreicht.

Fig. 11 zeigt eine weitere Ausgestaltung der lösbaren Halterung eines Klettbandes FG, die aus einer Passungsnut 80 besteht, die enger als die Breite des Klettbandes FG ist, so daß dieses darin nach dem Einlegen festgelegt ist, aber nach dem Einschäumen mit dem Schaumstoffpolster relativ leicht herausgezogen werden kann. Diese Ausführung ist besonders dann vorteilhaft, wenn nur ein schmales Klettband eingeschäumt wird, bei dem sich im allgemeinen auch eine Webkante erübrigt. Eine leichte Hinterschneidung an den Kanten der Passungsnut ist vorteilhaft für den Halt und die Abdichtung, wie auch in den anderen Beispielen bereits gezeigt. Die Passungsnut 80 kann in der Formwand selbst oder in einer ein- oder aufgesetzten U-Schiene 318 eingebracht sein.

Eine weitere Möglichkeit, das Klettband lösbar zu haltern und/oder abzudichten, die vorzugsweise ergänzend zu den anderen Methoden zur Anwendung kommen kann, stellt die Verwendung eines Klebers 51 dar, der beim Einbringen in die Form hoch viskos ist und das Klettband sofort fixiert und evtl. abdichtet und der bei der Erwärmung durch den Schäumvorgang so spröde wird, daß das Ablösen beim Herausnehmen des Schaumstoffpolsters leicht möglich ist und der Klebstoff leicht aus dem Filz- oder Hakenbereich herausgelöst z. B. -gebürstet werden kann.

Wenn Klettbänder FG, wie in Fig. 11 gezeigt, ohne überstehenden Webkantenbereich verwendet werden, ist es vorteilhaft, den Rücken grobporig oder mit Schlingen S zur guten Verankerung mit den Schaumstoff auszurüsten.

Eine weitere vorteilhafte Variante in der Ausgestaltung des Klettbandes stellt ein Klettband ohne überstehende Webkanten mit aufgesetztem z. B. aufgenähtem vorzugsweise weitmaschigem, vorzugsweise seitlich überstehendem Band dar. Der Nähvorgang der Bänder kann preisgünstig auf Automaten durchgeführt werden.

Selbstverständlich können je nach Anwendungsfall die einzelnen Ausführungsbeispiele in aufeinander abgestimmter Weise vorteilhaft miteinander kombiniert werden.

**Patentansprüche**

1. Verfahren zur Herstellung von Schaumstoffpolstern (11, 12), insbesondere aus Polyurethanschaum, mit mindestens einem Klettband (H, F), das aus einem Haken- oder Filzbereich (H3, F3) besteht,
dadurch gekennzeichnet, daß das Klettband (H, F) an einer Formwand (30, 31) einer Form zum Schäumen des Polsters (11, 12) mit einem weiteren Halteklettband (HH), vorzugsweise einem Hakenband oder durch Vakuum oder durch Klebstoff (51) oder Klebeband oder in einer Passungsnut (80) im Haken-oder Filzbereich (H3, F3) lösbar gehaltert wird und der Haken- oder Filzbereich (H3, F3) randseitig gegen Eindringen von Schäummaterial abgedichtet wird und das Klettband (H, F) in einem solchen Abstand zur Formwand (30, 31) gehalten wird, daß der Schaumstoff (121, 122, 123) beim Schäumen dieses seitlich umschließt.

2. Verfahren nach Anspruch 1, dadurch gekennzeichnet, daß das Klettband (H, F) seitlich Webkantenbereiche (321, 341, 361) hat, die beim Schäumen des Polsters (11, 12) in einem solchen Abstand zur Formwand (30, 31) gehalten werden, daß der Schaumstoff (121, 122, 123) dieses mindestens teilweise umschließt.

3. Verfahren nach Anspruch 1 oder 2, dadurch gekennzeichnet, daß insbesondere ein an einer obenliegenden Formwand (31) gehaltertes Klettband (F31), insbesondere Filzband, in einem solchen Abstand zur Formwand (31) gehalten wird, daß die beim Aufschäumen zäh verfestigte Oberfläche des Schaumstoffes (121) in dieses eindringt und eine Dichtung gegen den Haken- bzw. Filzbereich (H3, F3) bildet.

4. Verfahren nach Anspruch 1, 2 oder 3, dadurch gekennzeichnet, daß das Vakuum in seiner Druckhöhe und Zuführdauer jeweils so zugeführt wird, daß entsprechend der Lage (41, 42, 43) des Klettbandes (H, F) in der Form (30, 31) und der dementsprechenden Zähigkeit des schäumenden Schaumstoffes, der Schaumstoff (12) in das Klettbandgewebe (HG, FG) aber nicht den Haken- oder Filzbereich (H3, F3) eindringt, und vorzugsweise das Vakuum über eine Drossel dem Klettband (F, H) zugeführt wird und das Ende der Zuführdauer des Vakuums jeweils von dem Zeitpunkt an bestimmt wird, zu dem sich das Vakuum zwischen der Drossel und dem Klettband (H, F) durch die Abdichtung des Klettbandgewebes (FG) durch Schaumstoff (12) erhöht.

5. Vorrichtung zur Herstellung von Schaumstoffpolstern (11, 12) nach einem der Ansprüche 1 bis 4, dadurch gekennzeichnet, daß auf oder in der Formwand (31) ein Halteklettband (HH32) durch eine Schiene (311, 312) gehaltert ist, die mit einem U-förmigen Steg (311') einen Webkantenbereich (HH31) des Halteklettbandes (HH) umschließt, und der Steg (311') in seiner Stärke etwa der Höhe der Haken des Halteklettbandes (HH) entspricht (Fig.4), und vorzugsweise der Steg (311') endseitig eine Dichtkante (311'), deren Höhe und Breite etwa der doppelten Stärke des Steges (311') entspricht, trägt. (Fig.5)

6. Vorrichtung zur Herstellung von Schaumstoffpolstern (11, 12) nach einem der Ansprüche 1 bis 4, dadurch gekennzeichnet, daß das Halteklettband (HH34) ohne Webkantenbereich in eine Nut in der Formwand (31) oder vorzugsweise in den Innenraum einer U-Schiene (312), die in oder auf der Formwand (31) mit der Unterseite des U-Profils befestigt ist, vorzugsweise durch Kleben eingesetzt ist, wobei die Schenkel (314) des U-Profils oder ein entsprechender Formwandrand als eine Dichtkante (314'') ausgebildet ist, die das Halteklettband (HH34) um den eingreifenden Haken- oder Filzbereich (F3) überragt und den eingreifenden Haken- oder Filzbereich (F3) überragt und den Webkantenbereich (341) nur teilweise in seiner Stärke bedeckt (Fig.6), und vorzugsweise die Dichtkante in eine Nut (315, 317) in die Formwand (31) oder eine daran befestigte U-Schiene (316) eingelegt ist und als Wulst (50) aus plastischem Material, vorzugsweise aus Borsiloxan, ausgebildet ist und sich mit ihrer Dichtkante in den Randbereich (362) des Haken- oder Filzbereiches (H3) erstreckt. (Fig. 7, Fig. 8)

7. Vorrichtung zur Herstellung von Schaumstoffpolstern (11, 12) nach Anspruch 5, dadurch gekennzeichnet, daß in der Formwand (31) oder in einer darauf befestigten U-Schiene (318) eine Passungsnut (80), die vorzugsweise an den Kanten hinterschnitten ist, eingebracht ist, die in ihrer Tiefe der Dicke des Klettbandes (FG) entspricht und deren Weer als die Breite des Klettbandes ist oder ggf. hinterschnitten dieser entspricht.

8. Vorrichtung nach einem der Ansprüche 5 bis 7, dadurch gekennzeichnet, daß in der Formwand (31) bzw. der U-Schiene (313, 316) gewebeseitig eine luftdurchlässige Platte (63) vorzugsweise aus Gewebe oder das Halteklettband (HH) mit Bohrungen (60) oder Nuten (61) angeordnet ist, die mit einer Vakuumpumpe (VP) über ein steuerbares Ventil (V) und eine Drossel (D) verbunden ist und zwischen der Drossel (D) und der Bohrung (60) bzw. Nut (61) ein Druckwächter (PM) angeschlossen ist, dessen Druckmeldesignal vorzugsweise über ein einstellbares elektrisches oder pneumatisches Zeitverzögerungsglied (T) der Steuerung (St) des Ventils (V) zur Abschaltung zugeführt wird. (Fig. 10)

9. Verfahren nach Anspruch 1, dadurch gekennzeichnet, daß zur lösbaren Halterung und Abdichtung des Klettbandes ein Klebstoff (51) oder ein Klebeband mit einem Klebstoff verwandt wird, der hoch viskos ist und der durch Erwärmung beim Schäumprozeß spröde und leicht ablösbar wird.

10. Schaumstoffpolster (11, 12), hergestellt nach dem Verfahren nach einem der Ansprüche 1 bis 4 oder 9, insbesondere aus Polyurethanschaum mit mindestens einem Klettband (H, F), das aus einem Haken- oder Filzbereich (H3, F3) besteht, dadurch gekennzeichnet, daß der Schaumstoff (12) in das Klettbandgewebe (HG, FG) eingedrungen und mit diesem verbunden ist, und dieses seitlich umschließt, aber nicht in den Haken- oder Filzbereich (H3, F3) eingedrungen ist.

11. Schaumstoffpolster nach Anspruch 10, dadurch gekennzeichnet, daß das Klettbandgewebe (HG, FG) rückseitig ein poröses Band oder austretende Schlingen trägt, in das bzw. in die der Schaumstoff (12) eingedrungen ist.

12. Schaumstoffpolster nach Anspruch 10, dadurch gekennzeichnet, daß das Klettband (H, F) einen seitlichen Webkantenbereich (321, 341, 361) hat, der durch den Schaumstoff (121, 122, 123) mindestens teilweise umschlossen ist und das Klettbandgewebe (HG, FG) im Webkantenbereich (321, 341, 361) großporig gewebt ist.

13. Schaumstoffpolster nach einem der Ansprüche 10 bis 12, dadurch gekennzeichnet, daß der Haken- oder Filzbereich (H3, F3) mit dem Schaumstoff (12) etwa bündig abschließt oder insbesondere im Sitz- und Rückenbereich nach innen versetzt in dem Schaumstoff angebracht ist. (Fig. 4, 5, 6).

14. Schaumstoffpolster nach einem der Ansprüche 10 bis 13, dadruch gekennzeichnet, daß die Sitz- und Lehnfläche (11, 12) an der Unter- bzw. Rückseite Hakenbänder (H11, H12, H13, H22, H24) trägt und im Rückenbereich Hakenbänder (H22, H24) trägt und das Sitzpolster untenseitig Filzbänder (F13, F14) trägt.

## Claims

1. A method of manufacturing foam cushions (11, 12), especially of polyurethane foam, with at least one burr strip (H, F), which consists of a hook or felt area (H3, F3), characterized in that the burr strip (H, F) is held detachably on one wall (30, 31) of a mould for foaming the cushion (11, 12) by another holding burr strip (HH), preferably a hook strip, or by vacuum or by adhesive (51) or adhesive strip or in a locating groove (80) in the hook or felt area (H3, F3) and in that the hook or felt area (H3, F3) is sealed at the edges against penetration of foam material and in that the burr strip (H, F) is held at such a distance from the mould wall (30, 31) that the foam material (121, 122, 123) surrounds it laterally on foaming.

2. A method according to claim 1, characterized in that the burr strip (H, F) has selvedge areas (321, 341, 361) at the sides, which are held at such a distance from the mould wall (30, 31) during foaming of the cushion (11, 12) that the foam material (121, 122, 123) surrounds it at least partially.

3. A method according to claim 1 or claim 2, characterized in that especially a burr strip (F31), especially a felt strip, held against a top mould wall (31) is held at such a distance from the mould wall (31) that on foaming the glutinously solidified surface of the foam material (121) penetrates therein and forms a seal against the hook or felt area (H3, F3).

4. A method according to claim 1, claim 2 or claim 3, characterized in that the vacuum is so supplied, with respect to level of pressure and supply time, that, depending on the position (41, 42, 43) of the burr strip (H, F) in the mould (30, 31) and the corresponding toughness of the foaming foam material, the foam material (12) penetrates into the burr strip web (HG, FG) but not the hook or felt area (H3, F3), and in that the vacuum is preferably supplied via a throttle to the burr strip (F, H) and the end of the vacuum supply time is determined by the time at which the vacuum between the throttle and the burr strip (H, F) increases through the sealing off of the burr strip web (FG) by foam material (12).

5. A device for manufacturing foam cushions (11, 12) according to any one of claims 1 to 4, characterized in that a holding burr strip (HH32) is held on or in the mould wall (31) by a rail (311, 312) which surrounds a selvedge area (HH31) of the holding burr strip (HH) with a U-shaped bar (311'), and in that the thickness of the bar (311') corresponds approximately to the height of the hooks of the holding burr strip (HH) (Fig. 4), and in that the bar (311') preferably carries at its end a sealing edge (311'), the height and width of which correspond to approximately twice the thickness of the bar (311'), (Fig. 5).

6. A device for manufacturing foam cushions (11, 12) according to any one of claims 1 to 4, characterized in that the holding burr strip (HH34) is preferably inserted by adhesion without a selvedge area into a groove in the mould wall (31) or preferably into the inner space of a U-rail (312), which is fastened in or on the mould wall (31) with the bottom of the U-shape, the leg (314) of the U-shape or a corresponding mould wall edge being formed as a sealing edge (314″) which projects beyond the holding burr strip (HH34) around the engaging hook or felt area (F3) and projects beyond the engaging hook or felt area (F3) and only covers part of the thickness of the selvedge area (341) (Fig. 6), and in that the sealing edge is preferably inserted into a groove (315, 317) in the mould wall (31) or a U-rail (316) fastened thereto and is constructed as a bead (50) of plastics material, preferably borosiloxane, and extends with its sealing edge into the edge area (362) of the hook or felt area (H3), (Fig. 7, Fig. 8).

7. A device for manufacturing foam cushions (11, 12) according to claim 5, characterized in that a locating groove (80), which is preferably undercut at the edges, is inserted in the mould wall (31) or in a U-rail (318) fastened thereto, the depth of which locating groove (80) corresponds to the thickness of the burr strip (FG) and the width of which is smaller than the width of the burr strip or possibly corresponds thereto when undercut.

8, A device according to any one of claims 5 to 7, characterized in that an air-permeable plate (63) preferably of fabric or the holding burr strip (HH) containing bores (60) or grooves (61) is arranged in the mould (31) or the U-rail (313, 316) on the web side and is connected with a vacuum pump (VP) via a controllable valve (V) and a throttle (D) and in that between the throttle (D) and the bore (60) or groove (61) there is connected a pressure monitor (PM), the pressure indicating signal of which is preferably supplied via an adjustable electric or pneumatic time delay element (T) to the control (St) of the valve (V) to switch it off, (Fig. 10).

9. A method according to claim 1, characterized in that an adhesive (51) or an adhesive strip with an adhesive is used for the releasable support and sealing of the burr strip, which adhesive is highly viscous and becomes brittle and easily detachable through heating during the foaming process.

10. A foam cushion (11, 12), manufactured according to the method according to any one of claims 1 to 4 or 9, especially of polyurethane foam with at least one burr strip (H, F), consisting of a hook or felt area (H3, F3), characterized in that the foam material (12) has penetrated into the burr strip web (HG, FG) and is connected therewith and surrounds it laterally, but has not penetrated into the hook or felt area (H3, F3).

11. A foam cushion according to claim 10, characterized in that the burr strip web (HG, FG) has a porous strip or protruding loops on its back, into which the foam material (12) has penetrated.

12. A foam cushion according to claim 10, characterized in that the burr strip (H, F) has a lateral selvedge area (321, 341, 361), which is at least partially surrounded by the foam material (121, 122, 123) and in that the burr strip web (HG, FG) has large pores in the selvedge area (321, 341, 361).

13. A foam cushion according to any one of claims 10 to 12, characterized in that the hook or felt area (H3, F3) finishes approximately flush with the foam material (12) or is arranged staggered inwards in the foam material especially in the seat or rear area, (Figs. 4, 5, 6).

14. A foam cushion according to any one of claims 10 to 13, characterized in that the seat and back areas (11, 12) have hook strips (H11, H12, H13, H22, H24) on the bottom or rear and have hook strips (H22, H24) in the back area and in that the seat cushion has felt strips (F13, F14) underneath.

## Revendications

1. Procédé et appareil de fabrication d'éléments de rembourrage en mousse (11, 12), particulièrement en mousse polyuréthane, avec au moins une bande de fermeture du type tissu à crochets et bandes (H, F), consistant en une zone à crochets ou une zone feutre (H3, F3), caractérisés par le fait que la bande de fermeture (H, F) est maintenue de façon amovible à une paroi moulante (30, 31), d'un moule destiné au moussage du rembourrage (11, 12), à l'aide d'une autre bande de maintien (HH), de préférence une bande à crochets, ou par vacuum ou avec de la colle (51) ou une bande adhésive ou dans une rainure d'ajustement (80), dans la zone à crochets ou la zone feutre (H3, F3) et que la zone à crochets ou la zone feutre (H3, F3) est étanchéisé marginalement contre la pénétration de la mousse, et que la bande (H, F) est maintenue à une telle distance de la paroi moulante (30, 31) que la mousse (121, 122, 123) l'entoure latéralement lors du moussage.

2. Procédé selon spécification 1, caractérisé par le fait que la bande de fermeture du type crochets/feutre (H, F) est pourvue de lisières (321, 341, 361) latéralement, lesquelles sont maintenues, pendant le moussage du rembourrage (11, 12) à une telle distance de la paroi du moule (30, 31) que la mousse (121, 122, 123) l'enceigne au moins partiellement.

3. Procédé selon spécification 1 ou 2 caractérisé par le fait que, tout particulièrement, une bande de fermeture du type tissu à crochets et bandes (F31), tout particulièrement une bande en feutre, est maintenue à une paroi supérieure de moule (31) à une telle distance de la paroi de moule (31) que la surface de la mousse (121) solidifiée et ayant acquis tenacité lors du moussage, pénètre dans cette bande et forme une étanchéité vis-à-vis de la zone à crochets ou én feutre (H3, F3).

4. Procédé selon spécification 1, 2 ou 3, caractérisé par le fait que le vacuum est fait, quant à sa hauteur de pression et sa durée, de sorte que, conformément à la position (41, 42, 43) de la bande de type tissus à crochets et bandes (H, F) dans le moule (30, 31) et de la solidité adéquate de la matière cellulaire moussée, la mousse (12) pénètre dans le tissu de la bande de type tissus à crochets et bandes (HG, FG), mais non pas dans la zone crochets ou feutre (H3, F3), et que, de préférence, le vacuum est amené à la bande de fermeture de type tissus à crochets et bandes (F, H) par l'intermédiaire d'un papillon, et que la fin de la durée d'amenée de vacuum est déterminée, chaque fois, à partir du moment auquel le vacuum s'élève entre le papillon et la bande de fermeture de type tissus à crochets et bandes (H, F), à la suite de l'étanchéisation du tissu de la bande (FG) par la mousse (12).

5. Dispositif de fabrication de rembourrage (11, 12) selon l'une des spécifications de 1 à 4, caractérisé par le fait qu'une bande de maintien du type tissus à crochets et bandes (HH32) est maintenue à ou dans la paroi du moule (31) par un rail (311, 312), embrassant avec une âme en forme de U (311') une lisière (HH31) de la bande de maintien de type tissus à crochets et bandes (HH), l'épaisseur de cette âme (311') correspondant approximativement à la hauteur des crochets de la bande de maintien (HH) (fig. 4) et présentant, de préférence, à son extrémité une bordure d'étanchéité (311''), dont la hauteur et la largeur correspondent approximativement au double de l'épaisseur de l'âme (311') (fig. 5).

6. Dispositif de fabrication de rembourrage en mousse (11, 12) selon l'une des spécifications de 1 à 4, caractérisé par le fait que la bande de maintien de type tissus à crochets et bandes (HH34) sans lisière est insérée dans une encoche, pratiquée dans la paroi de moule (31) ou, de préférence, dans l'espace intérieur d'un rail en forme de U (312) fixé, dans ou à la paroi de moule (31) par la partie inférieure du profilé en U, ceci, de préférence par collage, les côtés (314) du profilé en U ou un bord adéquat de la paroi du moule formant une bordure d'étanchéité (314''), dépassant la bande de maintien de type tissus à crochets et bandes (HH34) et la zone crochets ou feutre (F3) et ne recouvrant la zone lisière (341) que partiellement dans sa largeur (fig.6) et que, de préférence, la bordure d'étanchéité est insérée dans une encoche (315, 317), pratiquée dans la paroi de moule (31) ou dans un rail en U (316), fixée à cette dernière, laquelle bordure d'étanchéité présente la forme d'un boudin (50) en matière plastique, de préférence en borsiloxan, s'étendant, avec son bord d'étanchéité, dans la zone marginale (362) de la zone crochets ou feutre (H3). (figures 7 et 8)

7. Dispositif de fabrication de rembourrages en mousse (11, 12) selon spécification 5, caractérisé par le fait que la paroi de moule (31) ou un rail en forme de U (318) fixé à celle-ci, sont équipés d'une rainure d'ajustement (80), découpée de préférence vers l'arrière, sur les bords, et dont la profondeur correspond à l'épaisseur de la bande de type tissus à crochets et bandes (FG) et dont la largeur est inférieure à celle de la bande ou, découpée en arrière le cas échéant, correspond à celle-ci.

8. Dispositif selon l'une des spécifications de 5 à 7, caractérisé par le fait que, dans la paroi du moule (31) ou dans le rail en forme de U (313, 316), côté tissu, une plaque perméable à l'air (63), de préférence en tissu, ou la bande de maintien du type tissus à crochets et bandes (HH) est disposée, avec perforations (60) ou encoches (61), et reliée à une pompe à vide (VP), par l'intermédiaire d'une soupape réglable (V) et un papillon (D) et qu'entre le papillon (D) et la forure (60) ou l'encoche (61) un avertisseur de pression (PM) est raccordé, avertisseur dont le signal indicateur de pression est amené à la commande (St) de la soupape (V), par l'intermédiaire d'un organe de temporisation pneumatique (T) aux fins de mise hors circuit.

9. Procédé selon la spécification 1, caractérisé par le fait que, pour le maintien amovible et l'étanchéisation de la bande de type tissus à crochets et bandes, un colle (51) ou une bande adhésive à colle est employée, colle extrêmement visqueuse et devenant fragile sous l'effet de la chaleur se produisant au cours du processus de moussage, de sorte qu'elle peut être éliminée facilement.

10. Rembourrage en mousse (11, 12) fabriqué selon le procédé selon l'une des spécification 1 à 4 et 9, tout particulièrement en polyuréthane et pourvu d'au moins une bande de type tissus à crochets et bandes (H, F), consistant en une zone à crochets ou une zone feutre (H3, F3), caractérisé par le fait que la mousse (12) ayant pénétré; le tissu de la bande du type tissus à crochets et bandes (HG, FG), est liée à celui-ci et l'entoure latéralement, sans cependant avoir pénétré dans la zone à crochets ou feutre (H3, F3).

11. Rembourrage en mousse selon spécification 10, caractérisé par le fait que le tissu de la bande de type tissus à crochets et bandes (HG, FG) est pourvu au verso d'une bande poreuse ou de boucles faisant saillie, pénétrée par la mousse (12).

12. Rembourrage en mousse selon spécification 10, caractérisé par le fait que la bande de type tissus à crochets et bandes (H, F) est pourvue latéralement d'une zone lisière (321, 341, 361) entourée au moins partiellement par la mousse (121, 122, 123) et que le tissu de la bande de type tissus à crochets et bandes (HG, FG) est tissé grossièrement dans la zone lisière (321, 341, 361).

13. Rembourrage en mousse selon l'une des spécifications 10 à 12, caractérisé par le fait que la zone à crochets ou feutre (H3, F3) se termine approximativement à niveau de la mousse (12) ou, tout particulièrement dans le secteur du siège ou du dossier, est mise en place, décalée vers l'intérieur, dans la mousse (fig. 4, 5, 6).

14. Rembourrage en mousse selon l'une des spécifications de 10 à 13,

caractérisé par le fait que la surface du siège et du dossier (11, 12) est pourvue dessous, resp. en arrière, de bandes à crochets (H11, H12, H13, H22, H24) et dans la zone du dos de bandes à crochets (H22, H24) et que le rembourrage du siège est pourvu, en dessous, de bandes de feutre (F13, F14).

0 116 357

Fig.1

Fig.2

Fig.3

1

Fig.4

Fig.4a

Fig.5

Fig.6

Fig.7

Fig.8

Fig.9

Fig.11

Fig.10